# EUROPEAN PATENT APPLICATION

(11) **EP 4 332 607 A1**
(43) Date of publication of application: **06.03.2024**
(21) Application number: 22192844.3
(22) Date of filing: 30.08.2022
(51) Int. Cl.: G01S 5/00, G01S 5/02

(54) **LOCALIZATION**

(71) Applicant: Nokia Technologies Oy, 02610 Espoo (FI)
(72) Inventor: KOLMONEN, Veli-Matti, 02920 Espoo (FI); JOLKKONEN, Jari, 08500 Lohja (FI)
(74) Representative: Sayer, Robert David

(57) **Abstract**

Example embodiments describe an apparatus, method and computer program relating to localization. For example, the method may comprise transmitting, by a first node, an advertisement message indicating a localization capability of the first node. The method may also comprise receiving, by the first node, a response message transmitted by a second node indicative of at least a known position of the second node. The method may also comprise determining, by the first node, a position of the first node with respect to the second node using the at least known position.

## Description

### Field

Example embodiments describe an apparatus, method and computer program related to localization.

### Background

Localization may be performed using radio systems. Localization may involve determining the current location of an asset, where the asset is a radio device or something that carries a radio device. The asset may, for example, be a user equipment (UE) or a user, a vehicle, craft or machine. Knowing where the asset is at a given time may be important for, for example, providing location-based services, for collision avoidance of mobile objects and/or to ensure certain operations and processes are going to plan. Indoor localization methods may present certain challenges.

### Summary

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, this specification describes an apparatus, comprising means for transmitting, by a first node, an advertisement message indicating a localization capability of the first node; receiving, by the first node, a response message transmitted by a second node indicative of at least a known position of the second node; determining, by the first node, a position of the first node with respect to the second node using the at least known position.

The localization capability of the first node may be indicated by a flag or field in the advertisement message.

The first node maybe associated with a mobile asset within an environment.

The second node may have a fixed location within the environment.

The response message may be received from the second node by the first node after a time delay. The time delay may be a random time delay.

The first node may be configured to determine a distance of the first node with respect to the second node based, at least in part, on a received signal strength associated with the response message and the known position of the second node in the response message.

The advertisement message may comprise a flag or field indicative of a first-level localization capability of the first node and wherein the response message is based on the second node identifying said first-level localization capability as indicated by the flag or field.

The first node may be configured to determine an angle of arrival or angle of departure of a signal comprising the response message transmitted by the second node.

The response message may further comprise a known orientation of the second node for determining the angle of arrival or angle of departure and wherein the first node may be configured to determine the position of the first node with respect to the second node using the known position of the second node and the angle of arrival or angle of departure.

The orientation of the first node with respect to a mobile asset maybe known at the first node, and wherein the first node may be further configured to determine the position of the asset with respect to the second node based also on the known orientation.

The response message may be a Bluetooth message and the angle of arrival or angle of departure may be determined based on information a Constant Tone Extension, CTE, part of the response message.

The response message may be a WiFi message and wherein the angle of arrival or angle of departure may be determined based on information in a Long Training Field, LTF, part of the response message.

The response message may be a 5^{th} generation cellular Sounding Reference Signal, SRS, message and the angle of arrival or angle of departure may be determined based on information in a SRS part of the response message.

The advertisement message may comprise a flag or field indicative of a second-level localization capability of the first node and wherein the response message maybe based on the second node identifying said second-level localization capability as indicated by the flag or field.

The first node may be configured to set the flag or field as indicative of either a first or second-level localization capability based on an accuracy requirement of the first node.

The apparatus may comprise the first node.

The apparatus maybe further configured to determine its own position based on determining its position with respect to a plurality of different second nodes.

According to a second aspect, this specification describes an apparatus, comprising means for: receiving, by a second node, an advertisement message indicating a localization capability of a first node; transmitting, by the second node, a response message for the first node, the response message indicative of at least a known position of the second node, the response message transmitted by the second node responsive to receiving the advertisement message from the first node indicating that the first node has a localization capability.

The localization capability of the first node may be indicated by a flag or field in the advertisement message.

The first node maybe associated with a mobile asset within an environment.

The second node may have a fixed location within the environment.

The response message may be transmitted by the second node to the first node after a time delay. The time delay may be a random time delay.

The received advertisement message may comprises a flag or field indicative of a first-level localization capability of the first node and wherein the response message transmitted by the second node may be based on the second node identifying said first-level localization capability as indicated by the flag or field.

The response message may comprise information sufficient for the first node to determine a distance of the first node with respect to the second node based, at least in part, on a received signal strength associated with the response message and the known position of the second node in the response message.

The advertisement message may comprise a flag or field indicative of a second-level localization capability of the first node and wherein the response message transmitted by the second node may be based on the second node identifying said first-second localization capability as indicated by the flag or field.

The response message may comprise information sufficient for the first node to determine the angle of arrival or angle of departure of a signal comprising the response message transmitted by the second node.

The response message may comprises a known orientation of the second node.

The response message may be a Bluetooth message comprising a Constant Tone Extension, CTE.

The response message may be a WiFi message comprising a Long Training Field, LTF, part of the response message configured to enable determination of angle of arrival or angle of departure at the first node.

The response message may be a 5^{th} generation cellular Sounding Reference Signal, SRS, message and the angle of arrival or angle of departure may be determined based on information in a SRS part of the response message.

The second node may be configured to determine, or cause determination of, the position of the first node with respect to the second node if the received advertisement message comprises a flag or field indicative of no localization capability of the first node.

According to a third aspect, this specification describes a method, the method comprising: transmitting, by a first node, an advertisement message indicating a localization capability of the first node; receiving, by the first node, a response message transmitted by a second node indicative of at least a known position of the second node; determining, by the first node, a position of the first node with respect to the second node using the at least known position.

The localization capability of the first node may be indicated by a flag or field in the advertisement message. The first node may be associated with a mobile asset within an environment. The second node may have a fixed location within the environment. The response message may be received from the second node by the first node after a time delay. The time delay may be a random time delay.

The first node may determine a distance of the first node with respect to the second node based, at least in part, on a received signal strength associated with the response message and the known position of the second node in the response message.

The advertisement message may comprise a flag or field indicative of a first-level localization capability of the first node and wherein the response message is based on the second node identifying said first-level localization capability as indicated by the flag or field.

The first node may determine an angle of arrival or angle of departure of a signal comprising the response message transmitted by the second node.

The response message may further comprise a known orientation of the second node for determining the angle of arrival or angle of departure and wherein the first node may determine the position of the first node with respect to the second node using the known position of the second node and the angle of arrival or angle of departure.

The orientation of the first node with respect to a mobile asset maybe known at the first node, and wherein the first node may determine the position of the asset with respect to the second node based also on the known orientation.

The response message may be a Bluetooth message and the angle of arrival or angle of departure may be determined based on information a Constant Tone Extension, CTE, part of the response message. The response message may be a WiFi message and wherein the angle of arrival or angle of departure may be determined based on information in a Long Training Field, LTF, part of the response message. The response message may be a 5^{th} generation cellular Sounding Reference Signal, SRS, message and the angle of arrival or angle of departure may be determined based on information in a SRS part of the response message.

The advertisement message may comprise a flag or field indicative of a second-level localization capability of the first node and wherein the response message maybe based on the second node identifying said second-level localization capability as indicated by the flag or field.

The first node may set the flag or field as indicative of either a first or second-level localization capability based on an accuracy requirement of the first node.

The method may be performed by, or at, the first node.

The apparatus may further determine its own position based on determining its position with respect to a plurality of different second nodes.

According to a fourth aspect, this specification describes a method, the method comprising: receiving, by a second node, an advertisement message indicating a localization capability of a first node; transmitting, by the second node, a response message for the first node, the response message indicative of at least a known position of the second node.

The localization capability of the first node may be indicated by a flag or field in the advertisement message. The first node may be associated with a mobile asset within an environment. The second node may have a fixed location within the environment. The response message may be transmitted by the second node to the first node after a time delay. The time delay may be a random time delay.

The received advertisement message may comprises a flag or field indicative of a first-level localization capability of the first node and wherein the response message transmitted by the second node may be based on the second node identifying said first-level localization capability as indicated by the flag or field.

The response message may comprise information sufficient for the first node to determine a distance of the first node with respect to the second node based, at least in part, on a received signal strength associated with the response message and the known position of the second node in the response message.

The advertisement message may comprise a flag or field indicative of a second-level localization capability of the first node and wherein the response message transmitted by the second node may be based on the second node identifying said first-second localization capability as indicated by the flag or field.

The response message may comprise information sufficient for the first node to determine the angle of arrival or angle of departure of a signal comprising the response message transmitted by the second node.

The response message may comprises a known orientation of the second node.

The response message may be a Bluetooth message comprising a Constant Tone Extension, CTE. The response message may be a WiFi message comprising a Long Training Field, LTF, part of the response message configured to enable determination of angle of arrival or angle of departure at the first node. The response message may be a 5^{th} generation cellular Sounding Reference Signal, SRS, message and the angle of arrival or angle of departure may be determined based on information in a SRS part of the response message.

The second node may determine, or cause determination of, the position of the first node with respect to the second node if the received advertisement message comprises a flag or field indicative of no localization capability of the first node.

According to a fifth aspect, this specification describes a computer program comprising instructions for causing an apparatus to perform at least the following: transmitting, by a first node, an advertisement message indicating a localization capability of the first node; receiving, by the first node, a response message transmitted by a second node indicative of at least a known position of the second node; determining, by the first node, a position of the first node with respect to the second node using the at least known position.

The fifth aspect may further comprise any feature of the third aspect.

According to a sixth aspect, this specification describes a computer program comprising instructions for causing an apparatus to perform at least the following: receiving, by a second node, an advertisement message indicating a localization capability of a first node; transmitting, by the second node, a response message for the first node, the response message indicative of at least a known position of the second node.

The sixth aspect may further comprise any feature of the fourth aspect.

According to a seventh aspect, this specification describes a computer-readable medium (such as a non-transitory computer-readable medium) comprising program instructions stored thereon for performing at least the following: transmitting, by a first node, an advertisement message indicating a localization capability of the first node; receiving, by the first node, a response message transmitted by a second node indicative of at least a known position of the second node; determining, by the first node, a position of the first node with respect to the second node using the at least known position.

The seventh aspect may further comprise any feature of the third aspect.

According to an eighth aspect, this specification describes a computer-readable medium (such as a non-transitory computer-readable medium) comprising program instructions stored thereon for performing at least the following: receiving, by a second node, an advertisement message indicating a localization capability of a first node; transmitting, by the second node, a response message for the first node, the response message indicative of at least a known position of the second node.

The eighth aspect may further comprise any feature of the fourth aspect.

According to a ninth aspect, this specification describes an apparatus comprising: at least one processor; and at least one memory including computer program code which, when executed by the at least one processor, causes the apparatus to: transmit, by a first node, an advertisement message indicating a localization capability of the first node; receive, by the first node, a response message transmitted by a second node indicative of at least a known position of the second node; determine, by the first node, a position of the first node with respect to the second node using the at least known position.

The ninth aspect may further comprise any feature of the third aspect.

According to a tenth aspect, this specification describes an apparatus comprising: at least one processor; and at least one memory including computer program code which, when executed by the at least one processor, causes the apparatus to: receive, by a second node, an advertisement message indicating a localization capability of a first node; transmit, by the second node, a response message for the first node, the response message indicative of at least a known position of the second node.

The tenth aspect may further comprise any feature of the fourth aspect.

### Drawings

Embodiments will be described, by way of non-limiting example, with reference to the accompanying drawings as follows:
FIG. 1 is a schematic view of a first localization configuration;
FIG. 2 is a schematic view of a second localization configuration;
FIG. 3 is a schematic view of a third localization configuration according to an example embodiment;
FIG. 4 is a flow diagram indicating processing operations according to an example embodiment;
FIG. 5 is a schematic view of a packet, useful for understanding some example embodiments;
FIG. 6 is a schematic view of a fourth localization configuration in a first phase of operation according to an example embodiment;
FIG. 7 is a schematic view of the FIG. 6 fourth localization configuration in a second phase of operation according to an example embodiment;
FIG. 8 is a schematic view of the FIG. 6 fourth localization configuration in a first phase of operation at a later time according to an example embodiment;
FIG. 9 is a schematic view of the FIG. 8 fourth localization configuration in a second phase of operation according to an example embodiment;
FIG. 10 is a flow diagram indicating processing operations according to an example embodiment;
FIG. 11 shows an apparatus according to some example embodiments
FIG. 12 shows a non-transitory media according to some example embodiments

### Detailed Description

Example embodiments describe an apparatus, method and computer program relating to localization, for example for localizing assets in indoor environments although embodiments are also applicable to other types of environment, including outdoor environments.

The term "indoor environments" may also apply to confined-space environments, including underground environments, e.g. mines.

As mentioned, localization involves determining a location of an asset. As used herein, an asset may be any object or device whose location is of interest, for example to an application, service or an organization. The asset may be a mobile asset. In radio systems and applications that employ radio systems, localization may be used to provide location-based services to assets, e.g. if the asset is a smartphone, tablet computer or other device capable of outputting information. For example, travel, weather and safety -type information may be provided on the basis of where the smartphone currently is.

Localization may also be used to allow organizations to track the locations of assets, e.g. to ensure certain operations and processes are going to plan. Localization may also be important from a safety point of view, e.g. for collision avoidance of people, vehicles, craft and machines.

The use of systems such as the Global Navigation Satellite System (GNSS) is well known but is generally not appropriate for indoor localization.

Indoor localization schemes may employ known technologies such as 4^{th} and 5^{th} generation cellular technologies (4/5G), Bluetooth, Bluetooth Low Energy (BLE), WiFi (IEEE 802.11) and Ultra-Wideband (UWB), to give some examples. Example embodiments are not limited to any such technologies, because the general methodologies explained herein may be applicable to any such examples and also to future radio technologies.

An indoor localization scheme usually relies on a plurality of so-called infrastructure devices (alternatively "anchors") which are fixed to the environment. The infrastructure devices act as reference points and the location of the asset is usually determined with respect to one, or a multiplicity of the infrastructure devices. Such indoor localization schemes may be angle or time -based schemes.

For example, angle schemes may comprise an angle-of-arrival (AoA) or Angle of Departure (AoD) scheme.

In AoA, the asset may be equipped with a tag which transmits a signal. Infrastructure devices, sometimes called locators, may be equipped with an antenna array comprised of multiple antennas having a known orientation (or "pose") which, with receiving and processing functionality, may determine the angle of arrival of the incoming signal. Assuming that the incoming signal from the tag propagates as a planar wave, phase differences observed at the respective antennas of the locator can be used to calculate its AoA. At least the bearing of the tag with respect to the locator can be known and other information, such as received signal strength information (RSSI) measurements may provide an estimate of range.

By determining an AoA for each of a plurality locators, with known positions, a more accurate position of the asset can be determined using multilateration. Multilateration may be performed by a localization management function which may be in communication with each of the locators and which therefore forms part of the infrastructure.

In AoD, the asset may comprise a receiver for receiving a signal transmitted by each of a plurality of antennas of an antenna array of a locator. With knowledge of certain properties of the antenna array, and the timing of transmissions from each antenna of the antenna array, the asset receiver may compute the AoD.

By determining an AoD for each of a plurality of locators, with knownledge of their known positions, the asset receiver may determine its own position using similar techniques to AoA, e.g. using multilateration.

In contrast, time-based schemes may use Time of Arrival (ToA) or Time Difference of Arrival (TDoA) for localization. Such schemes are well known, and generally involve determining the distance of the asset from each of one or more infrastructure devices based on the time taken for the signal to propagate between the asset and a given infrastructure device. Again, multilateration may be used to determine a more accurate position of the asset. For time-based schemes, different parts of the system need to be synchronized and this can make the process complex and slow.

Example embodiments focus mainly on angle schemes, particularly AoA, but it should be appreciated that embodiments are equally applicable to AoD and time-based schemes.

Example embodiments make a distinction between so-called tags and receivers.

As described herein, tags generally have only transmitting functionality for transmitting a so-called advertisement message in a signal. In contrast, receivers are capable of receiving a message in a signal from a tag, or from another receiver, and may determine, for example, one or more of the AoA, AoD, ToA or TDoA with respect to the tag. Receivers may also transmit messages. Receivers may also comprise more complex hardware in terms of having an antenna array, switching capabilities and/or processing capabilities.

Given the differences in complexity and cost, different localization configurations might be considered.

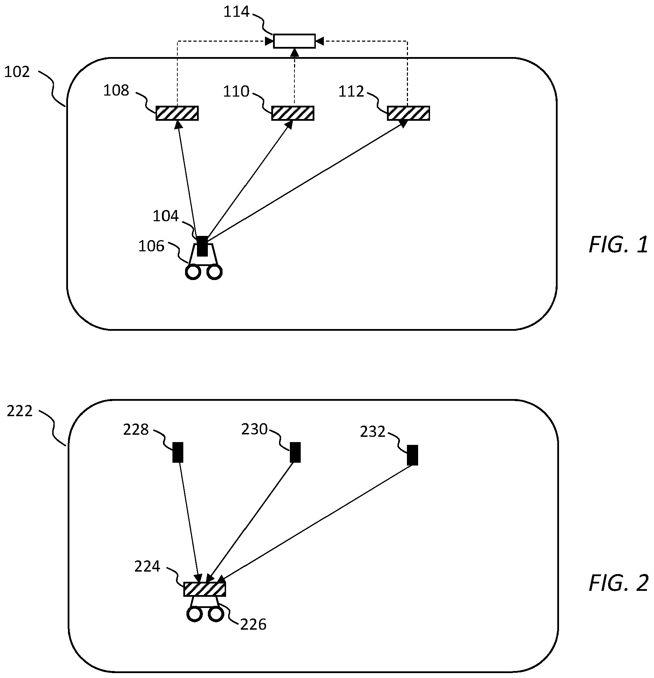

FIG. 1 shows what may be termed an "outside-in" localization configuration for AoA.

For a given indoor environment 102, there is shown a tag 104 which is carried by an asset 106. The tag 104 may, for example, be a BLE tag, configured to operate according to the Bluetooth Core Specification. As already mentioned, the use of BLE is an example.

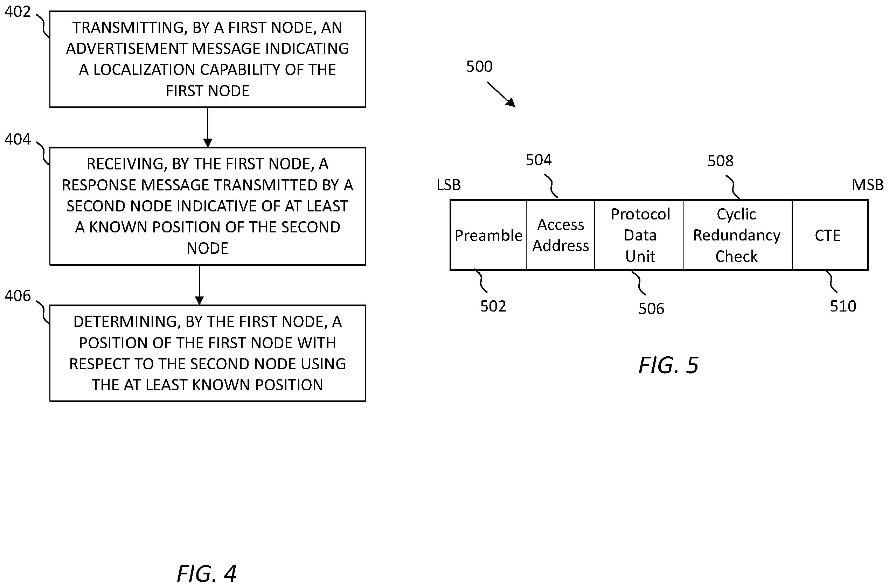

The tag 104 may be configured to broadcast messages in the form of advertisement packets. FIG. 5 shows an example BLE packet 500 which comprises a preamble 502, an access address 504, a protocol data unit (PDU) 506, and possibly other data such as cyclic redundancy check (CRC) data 508 and constant tone extension (CTE) data 510. The preamble 502 may be used at a receiver of the BLE packet 500 for frequency synchronization, automatic gain control training and symbol timing estimation. The access address 504 refers to the link layer connection address used between the transmitter and a given receiver. The PDU 506 comprises a header and payload, the payload being protocol-specific information and possibly user data. The CRC data 508 is used for error detection purposes, as is known. The CTE data 510 is an optional bit sequence that, when modulated and transmitted, produces a tone that can be used at the receiver for determining AoA or AoD.

Returning back to FIG. 1, first, second and third receivers 108, 110, 112 are shown, at fixed locations in the indoor environment 102. Each of the first, second and third receivers 108, 110, 112 may be BLE receivers, configured to operate according to the Bluetooth Core Specification. Each of the first, second and third receivers 108, 110, 112 may receive an advertisement packet from the tag 104 and determine respective AoAs. Assuming the orientations of the first, second and third receivers 108, 110, 112 (or, more specifically, their antennas) are known so that relative differences can be accounted for, then the location of the tag 104 can be computed using multilateration. This may be computed at a location management function 114 or by one of the first, second and third receivers 108, 110, 112 if the AoAs can be shared. The location of the tag 104 and that of the asset 106 may be the same and hence the location of the asset 106 is also known. Any difference between the orientation and/or location of the tag 104 and that of the asset 106 can be communicated to the location management function 114 if necessary so that the location of the asset can be updated accordingly.

FIG. 2 shows what may be termed an "inside-out" localization configuration for AoA.

For a given indoor environment 222, there is shown a receiver 224 which is carried by an asset 226. The receiver 224 may, for example, be a BLE receiver, configured to operate according to the Bluetooth Core Specification. The use of BLE is an example.

The receiver 224 may be configured to receive messages in advertisement packets which are periodically transmitted by tags. The advertisement packets may be the same as described above with reference to FIG. 5, i.e. BLE packets 500.

First, second and third tags 228, 230, 232 are shown, at fixed locations in the indoor environment 222. Each of the first, second and third tags 228, 230, 232 may transmit an advertisement packet to the receiver 224 which may determine respective AoAs for each advertisement packet. Assuming the locations of the first, second and third tags 228, 230, 232 are known, then the location of the receiver 224 can be computed by itself using multilateration. The location of the receiver 224 and that of the asset 106 may be the same and hence the location of the asset 226 is also therefore known. Any difference between the orientation and/or location of the receiver 224 and that of the asset 226 can be used to update the location of the asset accordingly.

From a complexity and cost point of view, the FIG. 2 "inside-out" localization configuration has certain advantages in that the infrastructure anchors, of which there may be many, can be relatively inexpensive tags. This provides a cost-effective way of covering large indoor environments. However, this does not scale well with the number of assets to be located.

Example embodiments therefore relate to apparatuses, methods and computer programs associated with a more hybrid approach to localization. For example, a messaging sequence will be outlined below that may be applicable to such a hybrid approach.

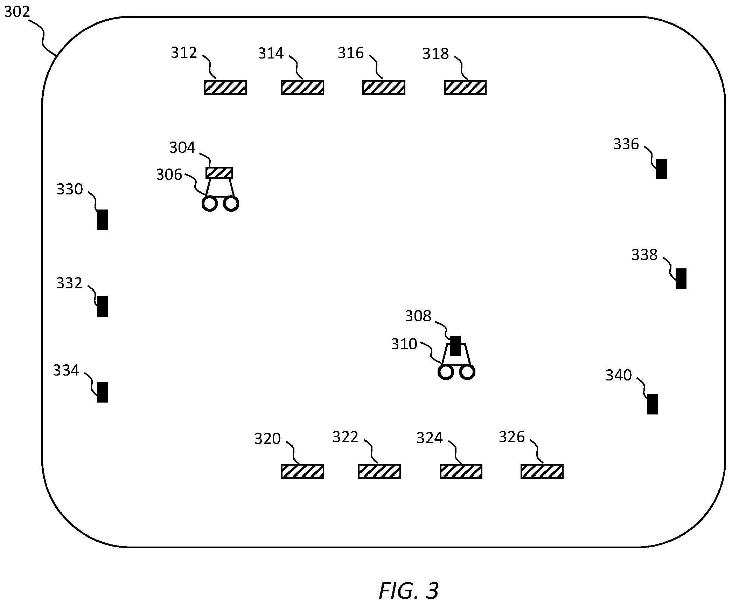

FIG. 3 is a schematic view of an indoor environment 302 which may be useful for understanding example embodiments. The indoor environment 302 may, for example, comprise at least part of an underground mine.

A plurality of infrastructure anchors are provided at fixed locations within the indoor environment 302. These may comprise a mixture of infrastructure tags and infrastructure receivers.

For example, first to eighth infrastructure receivers 312, 314, 316, 318, 320, 322, 324, 326 are shown at respective locations and first to sixth infrastructure tags 330, 332, 334, 336, 338, 340 are also shown at respective locations.

An asset receiver 304 is shown carried by a first asset 306, e.g. a vehicle. An asset tag 308 is shown carried by a second asset 310. In practise, there may be many more infrastructure receivers, tags, assets, and asset receivers and tags.

In this hybrid approach, the asset tag 308 may simply broadcast advertisement messages periodically, as in the case for the FIG. 1 "outside-in" localization configuration, and one or more of the first to eighth infrastructure receivers 312, 314, 316, 318, 320, 322, 324, 326 may receive and determine the respective relative locations of the asset tag 308 therefrom. An asset management function, not shown, may localise the asset tag 308 using multilateration.

Alternatively, or additionally, the first to sixth infrastructure tags 330, 332, 334, 336, 338, 340 may broadcast advertisement messages periodically, as in the case for the FIG. 2 "inside-out" localization configuration, and the asset receiver 304 may determine its own position accordingly.

As another option, and according to some example embodiments, the asset receiver 304 may be configured to broadcast its own advertisement message periodically with an indication that it has some localization capability.

The advertisement message may be received by one or more of the first to eighth infrastructure receivers 312, 314, 316, 318, 320, 322, 324, 326 which may be configured to transmit a response message to the asset receiver 304. This response message may indicate the location of the relevant infrastructure receiver. As for the above examples, the advertisement message and the response message may comprise BLE packets, but other types of packet may be used.

The asset receiver 304 may then compute, for example, the AoA of the signal carrying the response message from each of the relevant infrastructure receivers and, with the location information, determine the position and/or orientation of the asset receiver 304 with respect to each infrastructure receiver. Any significant difference, e.g. between the orientation and distance of the asset receiver 304 and the first asset 306 can be used to update the location accordingly.

Based on such computations with respect to a plurality of the first to eighth infrastructure receivers 312, 314, 316, 318, 320, 322, 324, 326, an accurate location of the first asset 306 can be computed by itself using multilateration.

It follows that the asset receiver 304 may determine its own position using signals from at least three infrastructure nodes, for example at least three of the first to eighth infrastructure receivers 312, 314, 316, 318, 320, 322, 324, 326, at least three of the first to sixth infrastructure tags 330, 332, 334, 336, 338, or at least three infrastructure receivers and infrastructure tags in any combination. The choice may depend on which are in-range of the asset receiver 304. It offers a low-cost solution because there does not need to be any infrastructure side computation nor time synchronization. It may keep system complexity and cost at a reasonable level regardless of scale.

FIG. 4 is a flow diagram indicating processing operations that may be performed according to one or more example embodiments. The processing operations may be performed by hardware, software, firmware or a combination thereof. For example, the processing operations may be performed by a first node, which may be the asset receiver 304 referred to in relation to FIG. 3.

A first operation 402 may comprise transmitting, by a first node, an advertisement message indicating a localization capability of the first node.

A second operation 404 may comprise receiving, by the first node, a response message transmitted by a second node indicative of at least a known position of the second node. The response message may be transmitted by the second node responsive to receiving the advertisement message from the first node indicating that the first node has a localization capability.

A third operation 406 may comprise determining, by the first node, a position of the first node with respect to the second node using the at least known position.

The determined position may, for example, refer to orientation, or pose, of the first node with respect to the second node, taking into account any differences in antenna poses at each end of the link.

Alternatively, or additionally, the determined position may refer to an estimate of distance between the first node and the second node, which can be used with knowledge of the second node's position.

Typically, the first node may be associated with a mobile asset within an environment and the second node may have a fixed location within the environment.

The localization capability of the first node may be indicated by a flag, or field, in the advertisement message. The flag, or field, may comprise one or more bits of data.

For example, referring to the BLE packet 500 in FIG. 5, the flag may comprise one or more bits that comprise part of the PDU 506. So long as a receiver of the BLE packet 500, i.e. the second node, knows the placement (timing) of the flag or field in the BLE packet 500, or other message format, then the second node can determine if the first node has a localization capability. This concept applies to other forms of packet, e.g. WiFi or RAN packets, and is not limited to BLE.

By "localization capability" it is meant that the first node can at least determine its position with respect to the second node, e.g. in terms of orientation and/or distance. With knowledge of multiple such orientations and/or distances from, e.g. three such second nodes, then the first node can determine its geospatial position using multilateration.

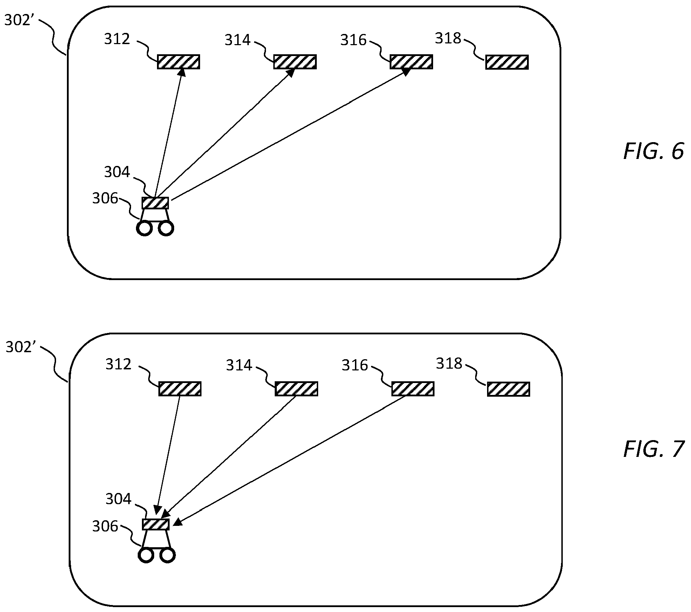

FIG. 6 shows part 302' of the FIG. 3 indoor environment 302; in this case, the asset receiver 304 may comprise the first node and each of the first, second and third infrastructure receivers 312, 314, 316 may comprise different second nodes.

At a given time, the asset receiver 304 may transmit a BLE advertisement message indicating that it has a localization capability.

Table 1 indicates example values for the localization capability flag or field of the BLE advertisement message or other type of advertisement message.

**Table 1 - Example Values for Localization Capability Flag or Field**

| Flag / Field Value | Operation mode | Second Node Response |
|---|---|---|
| 0 or No Value | No Capability | Second Node Does Not Respond |
| 1 | Medium Capability | Second Node Responds with Standard Advertising Packet, including Known Position of Second Node. |
| 2 | Advanced Capability | Second Node Responds with Standard Advertising Packet, including Known Position of Second Node and CTE data. |

Table 2 indicates an example format for the known position payload in the second node response message.

**Table 2 - Example Format for Position Payload in Second Node Response Message**

| Parameter | x [m] | y [m] | z [m] |
|---|---|---|---|
| Type | float | float | float |

In this case, a flag or field value of "0", or no value, indicates that the first node has no localization capability. This may be the case if the first node is a tag. The second node, e.g. each of first, second and third infrastructure receivers 312, 314, 316 will not send a response message.

If the flag or field is a "1" or "2", this indicates that the first node is a receiver with some form of localization capability. Here, the two different values indicate medium and advanced localization capabilities, respectively. In other embodiments, only one, or greater than two levels of capability may be enabled.

For example, if the first node does not have AoA or AoD measurement capability, but can make a coarse position estimation based on, for example, distance between the first and second nodes using RSSI measurements, or similar, it may transmit an advertisement message with the flag or field set to "1". In this case, the second node, e.g. the first, second and third infrastructure receivers 312, 314, 316 in the FIG. 4 case, will each respond with a response message, e.g. a BLE advertising packet, including the known positions of the respective infrastructure receivers (see Table 2).

For example, if the first node has AoA or AoD measurement capability, for example based on using CTE data 510 in BLE advertising packets, it may transmit an advertisement message with the flag or field set to "2". In this case, the second node, e.g. the first, second and third infrastructure receivers 312, 314, 316 in the FIG. 4 case, will each respond with a response message, e.g. a BLE advertising packet including CTE data 510, and the known positions of the respective infrastructure receivers (see Table 2).

FIG. 7 indicates graphically the response message transmitted by each of the first, second and third infrastructure receivers 312, 314, 316 at the later time.

The response message may not be transmitted immediately; there may be a time delay. The time delay may a random time delay, in order that the response messages are not transmitted, and therefore received, at the same time.

Responsive to receiving the response message from a particular second node, the first node may be configured to determine its position with respect to the particular second node, depending on its positioning capability.

For example, if the asset receiver 304 transmitted a "1" for the localization capability flag or field in the advertisement message, it may receive a response message from each of the first, second and third infrastructure receivers 312, 314, 316 at slightly different times. It will then know the respective positions of the first, second and third infrastructure receivers 312, 314, 316 and can estimate distances from each using RSSI measurements. Multilateration can then be used to derive a coarse position estimate.

For example, if the asset receiver 304 transmitted a "2" for the localization capability flag or field in the advertisement message, it may receive a response message from each of the first, second and third infrastructure receivers 312, 314, 316 at slightly different times. It will then know the respective positions of each of the first, second and third infrastructure receivers 312, 314, 316 and can determine AoA or AoD from each using the CTE data in each response message. Multilateration can then be used to derive a more accurate position estimate.

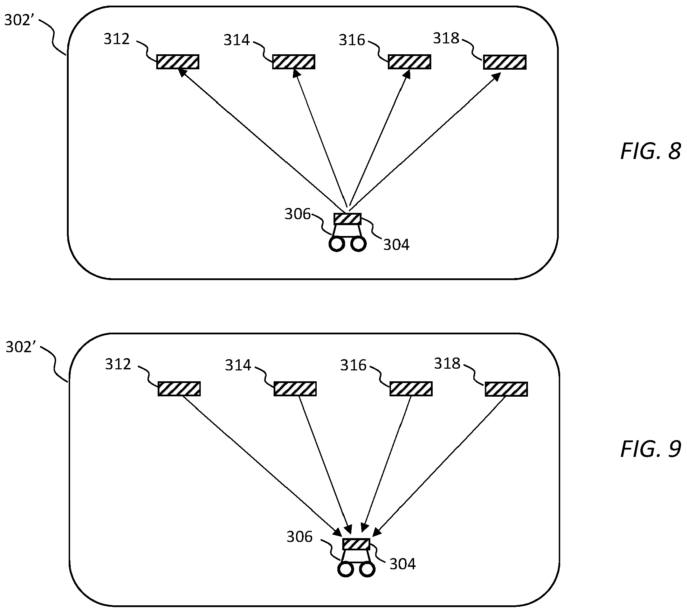

FIGs. 8 and 9 show a later occurrence in which a greater number of infrastructure receivers 312, 314, 316, 318 can be used, which may provide an even greater level of accuracy. FIG. 8 shows transmission of the advertisement message from the asset receiver 304 to each of the first to fourth infrastructure receivers 312, 314, 316, 318. FIG. 7 shows transmission of response messages from each of the first to fourth infrastructure receivers 312, 314, 316, 318 to the asset receiver 304.

Note that where response messages use a protocol other than BLE, then some other data may be needed in place of CTE data for AoA or AoD measurements. For example, in WiFi, the Long Training Field (LTF) can be used for the same purpose. For example, where the response message is a 5^{th} generation cellular Sounding Reference Signal (SRS) message, the AoA or AoD may be determined based on information in the SRS part of the response message.

For completeness, it will be appreciated that the response message may also comprise an indication of the orientation of the antennas comprising the antenna array of the second node. In this respect, the orientation of antennas for one infrastructure receiver may be different from those of another infrastructure receiver. It is therefore usual to calibrate the orientation of the antennas, for example with respect to a common reference direction, so that the first node computes AoA or AoD for all infrastructure receivers with respect to the common reference direction. Similarly, the distance and/or orientation of antennas for an asset receiver may not be aligned with, for example, a reference part or point of the asset, e.g. its front. Therefore, the relative distance and/or orientation with respect to the reference part or point may also be taken into account when computing the position of the asset itself.

In terms of set-up, infrastructure receivers may be fixed to the particular environment. The orientation of antennas comprising the antenna array for an infrastructure receiver may be calibrated and recorded. The recorded orientation information may be provided to asset receivers, either offline, or the information may be stored on a memory, e.g. a ROM, of the infrastructure receiver so that the information can be sent in response messages. Calibration of the asset receiver antennas with respect to the reference part or point of the asset may also be performed, and the information stored locally on a memory, e.g. a ROM, of the asset receiver.

Some assets may carry inexpensive tags, and others may carry more expensive receivers.

Asset tags may be programmed to have a localization capability flag or field with value "0" or similar. In use, advertisement messages transmitted by asset tags may be used by infrastructure receivers according to the above-described outside-in localization configuration. This requires use of a localization management function.

Asset receivers, on the other hand, may be programmed to have a localization capability flag or field with value "1" or "2" or similar. This may be based on an accuracy requirement of the asset which carries the particular receiver. In use, advertisement messages transmitted by the asset receivers result in infrastructure receivers transmitting response messages, as described above with reference to FIGs. 4 - 9.

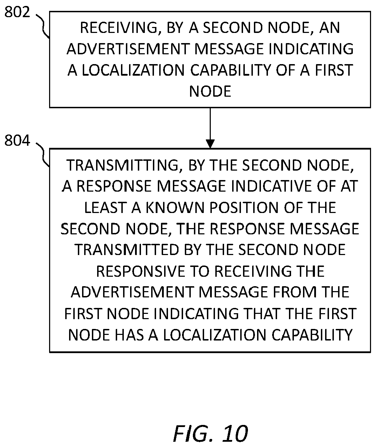

FIG. 10 is a flow diagram is shown indicating processing operations that may be performed according to one or more example embodiments. The processing operations may be performed by hardware, software, firmware or a combination thereof. For example, the processing operations may be performed by the second node, which may be an infrastructure receiver, e.g. one or more of the first to eighth infrastructure receivers 312, 314, 316, 318, 320, 322, 324, 326 referred to in relation to FIG. 3.

A first operation 802 may comprise receiving, by a second node, an advertisement message indicating a localization capability of a first node

A second operation 804 may comprise transmitting, by the second node, a response message for the first node, the response message indicative of at least a known position of the second node, the response message transmitted by the second node responsive to receiving the advertisement message from the first node indicating that the first node has a localization capability.

The localization capability of the first node may be indicated by a flag or field in the advertisement message.

The first node may be associated with a mobile asset within an environment. The second node may have a fixed location within the environment. The response message may be transmitted by the second node to the first node after a time delay, which may be a random time delay.

The received advertisement message may comprise a flag or field indicative of a first-level localization capability of the first node and wherein the response message transmitted by the second node is based on the second node identifying said first-level localization capability as indicated by the flag. The response message may comprise information sufficient for the first node to determine a received signal strength associated with the response message.

The advertisement message may comprise a flag or field indicative of a second-level localization capability of the first node and wherein the response message transmitted by the second node is based on the second node identifying said second localization capability as indicated by the flag. The response message may comprise information sufficient for the first node to determine the angle of arrival or angle of departure of a signal comprising the response message transmitted by the second node. The response message may comprise a known orientation of the second node.

The response message may be a Bluetooth message comprising a CTE.

The response message may be a WiFi message comprising a Long Training Field (LTF) part of the response message configured to enable determination of angle of arrival or angle of departure at the first node.

### Example Apparatus

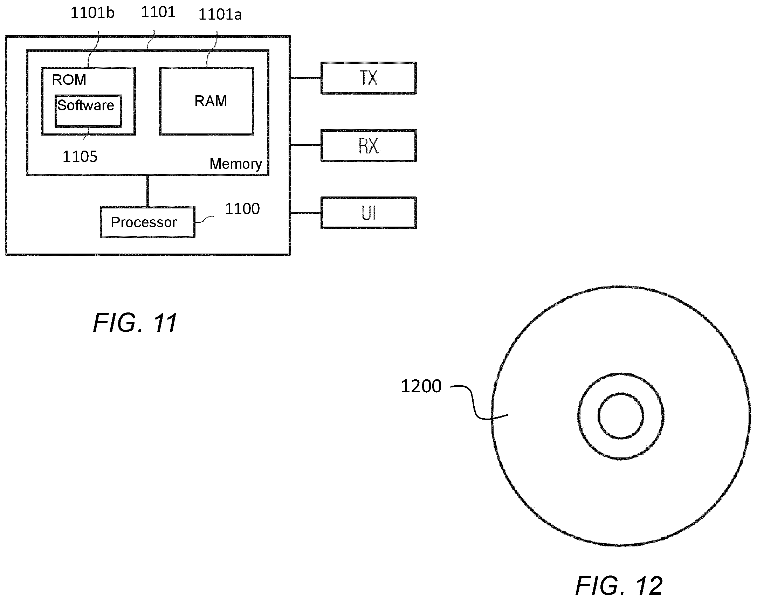

FIG. 11 shows an apparatus according to some example embodiments. The apparatus may comprise the first node or the second node as referred to above.

The apparatus may be configured to perform the operations described herein, for example operations described with reference to any disclosed process such is described with reference to FIGs 4 and 10. The apparatus comprises at least one processor 1100 and at least one memory 1101 directly or closely connected to the processor. The memory 1101 includes at least one random access memory (RAM) 1101a and at least one read-only memory (ROM) 901b. Computer program code (software) 1105 is stored in the ROM 1101b. The apparatus may be connected to a transmitter (TX) and a receiver (RX). The apparatus may, optionally, be connected with a user interface (UI) for instructing the apparatus and/or for outputting data. The at least one processor 1100, with the at least one memory 1101 and the computer program code 1105 are arranged to cause the apparatus to at least perform at least the method according to any preceding process.

FIG. 12 shows a non-transitory media 1200 according to some embodiments. The non-transitory media 1200 is a computer readable storage medium. It may be e.g. a CD, a DVD, a USB stick, a blue ray disk, etc. The non-transitory media 1200 stores computer program code, causing an apparatus to perform the method of any preceding process for example as disclosed in relation to the flow diagrams of FIGs. 4 and 10 and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi, Bluetooth and BLE.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments maybe implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, the apparatus comprising means for:
transmitting, by a first node, an advertisement message indicating a localization capability of the first node;
receiving, by the first node, a response message transmitted by a second node indicative of at least a known position of the second node;
determining, by the first node, a position of the first node with respect to the second node using the at least known position.

2. The apparatus of claim 1, wherein the localization capability of the first node is indicated by a flag or field in the advertisement message.

3. The apparatus of claim 1 or claim 2, wherein the first node is configured to determine a distance of the first node with respect to the second node based, at least in part, on a received signal strength associated with the response message and the known position of the second node in the response message.

4. The apparatus of claim 3 when dependent on claim 2, wherein the advertisement message comprises a flag or field indicative of a first-level localization capability of the first node and wherein the response message is based on the second node identifying said first-level localization capability as indicated by the flag or field.

5. The apparatus of any preceding claim, wherein the first node is configured to determine an angle of arrival or angle of departure of a signal comprising the response message transmitted by the second node.

6. The apparatus of claim 5, wherein the response message further comprises a known orientation of the second node for determining the angle of arrival or angle of departure and wherein the first node is configured to determine the position of the first node with respect to the second node using the known position of the second node and the angle of arrival or angle of departure.

7. The apparatus of claim 6, wherein the orientation of the first node with respect to a mobile asset is known at the first node, and wherein the first node is further configured to determine the position of the asset with respect to the second node based also on the known orientation.

8. The apparatus of any of claims 5 to 7, wherein the response message is a Bluetooth message and wherein the angle of arrival or angle of departure is determined based on information a Constant Tone Extension, CTE, part of the response message.

9. The apparatus of any of claims claim 5 to 7, wherein the response message is a WiFi message and wherein the angle of arrival or angle of departure is determined based on information in a Long Training Field, LTF, part of the response message.

10. The apparatus of any of claims claim 5 to 7, wherein the response message is a 5^{th} generation cellular Sounding Reference Signal, SRS, message and wherein the angle of arrival or angle of departure is determined based on information in a SRS part of the response message.

11. The apparatus of any of claims 5 to 10, when dependent on claim 2, wherein the advertisement message comprises a flag or field indicative of a second-level localization capability of the first node and wherein the response message is based on the second node identifying said second-level localization capability as indicated by the flag or field.

12. The apparatus of claim 4 and 11, and any claims dependent thereupon, wherein the first node is configured to set the flag or field as indicative of either a first or second-level localization capability based on an accuracy requirement of the first node.

13. The apparatus of any preceding claim, wherein the apparatus comprises the first node.

14. The apparatus of any preceding claim, the apparatus further configured to determine its own position based on determining its position with respect to a plurality of different second nodes.

15. An apparatus, the apparatus comprising means for:
receiving, by a second node, an advertisement message indicating a localization capability of a first node;
transmitting, by the second node, a response message for the first node, the response message indicative of at least a known position of the second node, the response message transmitted by the second node responsive to receiving the advertisement message from the first node indicating that the first node has a localization capability.

16. A method, the method comprising:
transmitting, by a first node, an advertisement message indicating a localization capability of the first node;
receiving, by the first node, a response message transmitted by a second node indicative of at least a known position of the second node;
determining, by the first node, a position of the first node with respect to the second node using the at least known position.

17. A method, the method comprising:
receiving, by a second node, an advertisement message indicating a localization capability of a first node;
transmitting, by the second node, a response message for the first node, the response message indicative of at least a known position of the second node.
